(19) Europäisches Patentamt

European Patent Office

Office européen des brevets

(11) Veröffentlichungsnummer: **0 304 511 B1**

## (12) EUROPÄISCHE PATENTSCHRIFT

(45) Veröffentlichungstag der Patentschrift: **11.11.92**

(21) Anmeldenummer: **87113611.5**

(22) Anmeldetag: **17.09.87**

(51) Int. Cl.⁵: **H02G 15/08**, H01R 9/05, H01R 4/72

(54) **Anschlussarmatur für Breitband-Koaxialkabel.**

(30) Priorität: **28.08.87 DE 3728826**

(43) Veröffentlichungstag der Anmeldung:
**01.03.89 Patentblatt 89/09**

(45) Bekanntmachung des Hinweises auf die
Patenterteilung:
**11.11.92 Patentblatt 92/46**

(84) Benannte Vertragsstaaten:
**BE DE NL**

(56) Entgegenhaltungen:
**DE-A- 3 127 869**
**DE-C- 3 436 635**
**DE-U- 8 603 795**

(73) Patentinhaber: **KATHREIN-WERKE KG**
**Luitpoldstrasse 18 - 20 Postfach 260**
**W-8200 Rosenheim 2(DE)**

(72) Erfinder: **Margreiter, Hans**
**Almrauschweg 1**
**W-8201 Kirchdorf(DE)**
Erfinder: **Staniszewski, Walter**
**Bach 18**
**W-8201 Aschau(DE)**

(74) Vertreter: **Flach, Dieter Rolf Paul, Dipl.-Phys.
et al
Patentanwälte Andrae/Flach/Haug/Kneissl
Prinzregentenstrasse 24
W-8200 Rosenheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Anschlußarmatur für Breitband-Koaxialkabel mit einem eine Schalteinheit enthaltenden abgedichteten abschirmenden Gehäuse und mindestens einer Anschlußeinheit mit einer Kontakteinrichtung für die Einführung eines Endes eines Breitband-Koaxialkabels sowie Mitteln zur gas- und feuchtigkeitsdichten Verbindung des eingeführten Breitband-Koaxialkabels mit der Anschlußeinheit. Eine derartige Anschlußarmatur ist insbesondere ein Verteiler/Abzweiger für Breitbandkommunikationsanlagen,wie das sogenannte Kabelfernsehen.

Der Anmelder hat sich unter Bezugnahme auf die ältere Anmeldung P 37 20 507.2 in der Bundesrepublik Deutschland freiwillig eingeschränkt und gesonderte Patentansprüche für die Bundesrepublik Deutschland vorgelegt.

Breitband-Koaxialkabel müssen breite Frequenzbänder in der Regel über größere Entfernungen möglichst verlustfrei übertragen. Dadurch sind für derartige Kabel technisch bestimmte Mindestabmessungen erforderlich, die darüber hinaus durch nationale und internationale Normen festgelegt sind. Die Außenleiter sind rohrförmig ausgebildet. Derartige Kabel weisen dadurch eine inhärente Steifigkeit auf, die zu großen Mindest-Krümmungsradien führt. Das führt bei der Verbindung derartiger Kabel mit Anschlußarmaturen zu großen praktischen Schwierigkeiten.

Derartige Anschlußarmaturen sind insbesondere die bereits genannten Abzweiger/Verteiler. Sie werden genau wie die Breitband-Koaxialkabel selbst in der Regel unterirdisch im Erdreich oder in Kabelschächten verlegt, wo sie über lange Zeit Außeneinwirkungen der unterschiedlichsten Art widerstehen müssen. Für Abzweiger/Verteiler für das Kabelfernsehen wird derzeit eine 20jährige Funktionsgarantie gefordert.

Nachdem die ersten Gehäuse für derartige Anschlußarmaturen aus zusammenpassenden Kunststoff-Formschalen bestanden, die nach außen durch Labyrinthdichtungen und eine Füllung mit Dichtungs-Formmassen abgedichtet waren, haben sich in jüngerer Zeit stabilere und besser abschirmende Druckguß-Metallgehäuse durchgesetzt, die einstückig mit diesen Gehäusen ausgeführte Anschlußstutzen für die Einführung der Breitband-Koaxialkabel aufweisen. Die Zahl der Anschlußstutzen variiert dabei bei verschiedenen Armaturen und wird durch die praktischen Anforderungen bestimmt. Zur gas- und feuchtigkeitsdichten Abdichtung der mit den Kabeln verbundenen Anschlußarmaturen hat sich in jüngerer Zeit die Schrumpftechnik als sicherste und dichteste Möglichkeit durchgesetzt. Durch besondere Ausgestaltungen der Anschlußeinheiten können in derartige Gehäuse verschiedene Kabelstärken sicher eingeführt und durch Aufschrumpfen einer Schrumpfmuffe abgedichtet werden. Zum relevanten Stand der Technik wird verwiesen auf die DE-OSen 33 26 128, 34 36 635 und 34 36 683.

Obwohl die bekannten, nach der Schrumpftechnik mit den Kabeln verbundenen Anschlußarmaturen alle Qualitätsanforderungen erfüllen und auch darüber hinaus gegen äußere Einflüsse im Erdreich beständig sind, hat es sich gezeigt, daß die Montage, d.h. die Verbindung derartiger Armaturen mit den Breitband-Koaxialkabeln, in der Praxis, insbesondere bei ungünstigen äußeren Bedingungen, schwierig und arbeitsaufwendig sein kann. Es ist nämlich so, daß bei den bekannten Anschlußarmaturen mit Anschlußstutzen für die direkte Einführung der Breitband-Koaxialkabel aufgrund der Durchmesser dieser Kabel und der unter praktischen Gesichtspunkten vorgegebenen Gehäuseabmessungen in der Regel mehrere Anschlußstutzen eng benachbart, üblicherweise auf zwei einander gegenüberliegenden Seiten des Gehäuses, angeordnet sind. Diese Anschlußstutzen weisen Schrumpfmuffen auf, in die die Kabel bis zur Herstellung des gewünschten Kontakts mit den Kontakteinrichtungen im Gehäuse eingeschoben werden, wonach zur Abdichtung die Schrumpfmuffen auf die Kabeloberfläche aufgeschrumpft werden. Wegen der großen räumlichen Nähe der benachbarten Anschlußstutzen ist es nunmehr jedoch nicht möglich, das in der Regel mit einer Brennerflamme durchgeführte Aufschrumpfen so gezielt durchzuführen, daß die verschiedenen Anschlüsse nacheinander geschrumpft werden können. Die Anschlüsse müssen daher gruppenweise geschrumpft werden, was bedeutet, daß alle Breitbandkabel gleichzeitig eingesteckt sein müssen und alle Anschlüsse möglichst gleichmäßig geschrumpft werden. Aufgrund der großen Biegesteifigkeit der Breitband-Koaxialkabel treten dabei jedoch an den Anschlußstutzen und in den Kabeln große Spannungen auf, die es nötig machen, die Kabel in den Anschlußstutzen während des Aufschrumpfens zu halten, was schwierig ist. Diese Spannungen werden dadurch verstärkt, daß das Schrumpfen selbst nicht gleichzeitig von allen Seiten her durchgeführt werden kann, so daß zusätzliche Spannungen an den Kontakten entstehen können, die in ungünstigen Fällen zu einer Lösung der Steckverbindungen führen können, was einen Austausch der Armatur und eine neuerliche Verbindung der Kabel mit der Armatur erforderlich macht.

Da ferner die Anschlußstutzen als Teile der Anschlußarmatur ausgeführt sind, wird beim Schrumpfen die ganze Armatur erwärmt, was es erforderlich macht, sie temperaturbeständig auszuführen, damit die in der Armatur angeordneten elektrischen Elemente nicht geschädigt werden.

Diese Beständigkeit gegen die beim Schrumpfen auftretenden Temperaturen stellt ein zusätzliches Erfordernis zu den durch die Funktion der Armatur vorgegebenen Erfordernissen dar und ist für die ganze restliche Lebensdauer der gesamten Vorrichtung ohne Bedeutung.

Es ist daher Aufgabe der vorliegenden Erfindung, eine Anschlußarmatur für Breitband-Koaxialkabel, insbesondere Abzweiger/Verteiler für derartige Kabel, die ein eine Schalteinheit enthaltendes abgedichtetes Abschirmgehäuse und mindestens eine Anschlußeinheit mit Kontakteinrichtung für die Einführung eines abgesetzten Endes eines Breitband-Koaxialkabels sowie Mittel zur gas- und feuchtigkeitsdichten Verbindung des eingeführten Breitband-Koaxialkabels mit der Anschlußeinheit aufweist, so zu gestalten, daß die Montage einer derartigen Armatur unter Verbindung mit mindestens einem, in der Regel jedoch mehreren Breitband-Koaxialkabeln stark erleichert wird, die für die Montage beengten räumlichen Bedingungen verbessert werden und außerdem bei der Auslegung der Anschlußarmatur ausschließlich bei der Montage auftretende Extrembedingungen in Form von z.B. durch das Schrumpfen bedingten erhöhten Temperaturen oder erhöhten Kabelspannungen mit berücksichtigt werden müssen. Neben der verbesserten Montagetauglichkeit soll zudem auch eine Möglichkeit gegeben sein, im Bedarfsfalle zumindest die über die Kabel eingeleiteten Zugspannungen aufzunehmen bzw. abzufangen.

Die Aufgabe wird bei einer Anschlußarmatur der genannten Art durch die Merkmale des Patentanspruches 1 gelöst. Vorteilhafte Ausgestaltungen der Erfindung sind in den Unteransprüchen angegeben.

Während bisher im Hinblick auf die erforderliche Robustheit und Dauerhaftigkeit der mit den Breitband-Koaxialkabeln verbundenen Anschlußarmaturen eine möglichst große Kompaktheit und Festigkeit als erforderlich angesehen wurde, liegt der vorliegenden Erfindung die Erkenntnis zugrunde, daß in Wirklichkeit eine derartige die Montage erschwerende Kompaktheit weder im Hinblick auf die Qualität der Übertragung noch auf die Dauerhaftigkeit der verlegten Anschlüsse erforderlich ist. Vielmehr sind durch eine räumlich Absetzung der Anschlußmuffen und Anschlußeinheiten für die Verbindung mit den Breitband-Koaxialkabeln von dem eigentlichen Gehäuse der Anschlußarmatur dann, wenn die Anschlußeinheiten mit diesem Gehäuse über relativ dünne flexible Verbindungskabel verbunden sind, erhebliche Vorteile erzielbar, die sowohl die Montage erleichtern als auch die negative Beeinflussung der Auslegung der Anschlußarmatur durch die Koaxialkabelanschlüsse bzw. die beim Anschließen auftretenden Bedingungen aufheben.

Gemäß der vorliegenden Erfindung wird somit eine Anschlußarmatur geschaffen, bei der das Breitband-Koaxialkabel nicht direkt mit dem Gehäuse der Anschlußarmatur verbunden wird, sondern über ein zwischengeschaltetes flexibles Verbindungskabel. Während für die Übertragung über große Entfernungen die dicken und dadurch zwangsläufig steifen Breitband-Koaxialkabel aus technischen Gründen erforderlich sind, entfällt dieses Erfordernis, wenn es sich nur um eine Überbrückung kurzer Wege handelt, die auch mit dünneren Kabeln ohne Qualitätsverlust möglich ist. Indem nunmehr zwischen die eigentliche Verbindungsstelle der Armatur mit den Breitbandkabeln und dem Gehäuse ein flexibler Verbindungsweg eingeschaltet ist, wird durch die bei der Montage erforderlichen Arbeitsgänge die Armatur selbst nicht beeinträchtigt, und außerdem lassen sich aufgrund der Flexibilität der Verbindungskabel die einzelnen Verbindungsstellen ohne weiteres separieren, so daß z.B. Abdichtungen durch Aufschrumpfen für jeden Anschluß gesondert durchgeführt werden können. Aufgrund der erhöhten Flexibilität der Anschlüsse wird der Platzbedarf für die Montage stark vermindert,und es wird eine kleinräumigere Verlegung möglich. Wie nachfolgend noch genauer erläutert wird, lassen sich die flexiblen Verbindungskabel auch so verlegen, z.B. durch ein Verlegen in Schlaufenform, daß sie eine Bewegungsreserve bilden und dadurch die in Kabelrichtung an der Armatur und den Kontaktstellen auftretenden Zugkräfte stark vermindern.

Diese Vorteile werden insbesondere dann erhalten, wenn man am Gehäuse Halte- oder Führungselemente vorsieht,die die räumliche Lage insbesondere mehrerer Verbindungskabel zueinander und zur Umgebung fixieren und diese Kabel ordnen. Die durch diese Halteelemente erfolgende zusätzliche Halterung kann dabei so ausgestaltet werden, daß sie entweder die Zugkräfte im Kabel aufnimmt, so daß diese nicht direkt auf die Armatur einwirken oder daß die Kabel in ihnen bei der Einwirkung einer vorgegebenen Mindestkraft rutschen können, was eine kontrollierte Ausnützung vorgesehener Bewegungsreserven in Form von Kabelbögen u.ä. ermöglicht.

Mit anderen Worten also kann erfindungsgemäß problemlos auch eine zusätzliche Zugentlastung vorgesehen sein, die entweder an der eine Verbindung zwischen dem Breitband-Koaxialkabel und der Armatur herstellenden Verbindungskabel, an der entsprechenden Kabelkupplung, d.h. beispielsweise der Anschlußmuffe am Verbindungskabel oder in einer bevorzugten Ausführungsform vor allem an dem Streckenkabel selbst angreift.

Die Zugentlastung kann aber beispielsweise über eine Schelle an der Außenumhüllung des Streckenkabels oder alternativ oder ergänzend zusätzlich auch an einem abisolierten Stück bzw.

Ende des Streckenkabels, also am Außenleiter direkt angreifen.

In einer bevorzugten Ausführungsform können dieses Zugentlastungen beispielsweise aus einem Drahtseil, einer Kette, einem Biegestück etc. bestehen, das zum einen am Verbindungskabel, der Armatur oder am Streckenkabel befestigt und am anderen Ende an einem festen Verankerungspunkt angebracht ist. Als fester Verankerungspunkt kann das Armaturgehäuse, ein separates, gegebenenfalls das Armaturengehäuse umgebendes Schutzgehäuse oder an anderen festen Verankerungsteilen angebracht sein. In Frage kommt hierbei beispielsweise die Wand, ein Mast, Bodenelemente, Schächte etc. Alternativ dazu sind auch starre Zugentlastungselemente, wie beispielsweise Bügel, möglich, über welche die Streckenkabel, das Verbindungskabel oder dessen Anschlußmuffe gehalten werden. Gegebenenfalls weitgehend starre Haltebügel in beliebiger Ausführungsform werden am gegenüberliegenden Ende in geeigneter Weise an einem Verankerungsteil bevorzugt gelenkig gehalten. Dadurch werden die erfindungsgemäßen Vorteile, nämlich die hohe Montagefreundlichkeit bzw. -tauglichkeit bei verbesserter Sicherheit erhöht. Denn die einzelnen Streckenkoaxialkabel können einzeln vorbereitet und an dem Verbindungskabel elektrisch angeschlossen werden, um erst danach die mechanische Verankerung am Haltebügel vorzusehen. Dabei kann der Haltebügel so beiseite geschwenkt werden, daß jeweils ein ausreichender Platzbedarf für die Montage gegeben ist. Danach wird das elektrisch angeschlossene und zugentlastete Kabel durch Zurückschwenken eines Haltebügels in eine gewünschte Stellung gebracht und dort gegebenenfalls fixiert. Nur der Vollständigkeit halber wird angemerkt, daß nicht alle Zugentlastungen verschwenkbar ausgebildet sein müssen, sondern daß bereits die Montagefreundlichkeit zumindest dann erzielt wird, wenn zumindest eines oder einige von mehreren Anschlüssen über diese Art zugentlastet fixiert werden können.

Weitere Vorteile, Einzelheiten und Merkmale der Erfindung ergeben sich nachfolgend aus den anhand von Zeichnungen erläuterten Ausführungsbeispielen der Erfindung. Dabei zeigen im einzelnen:

Figur 1 : eine erfindungsgemäße Anschlußarmatur mit vier Anschlußeinheiten;

Figur 2 : eine erfindungsgemäße Anschlußarmatur mit Halteelementen, bei der die Verbindung mit den Breitbandkoaxialkabeln so erfolgt, daß die Verbindungskabel eine Bewegungsreserve bilden;

Figur 3 : eine alternative Anordnung zu Figur 2;

Figur 4 : eine weitere alternative Ausführungsform bei zugentlastetem Streckenkabel;

Figur 5 : eine weitere schematisch gezeigte Ausführungsform mit verschwenkbarer Zugentlastung.

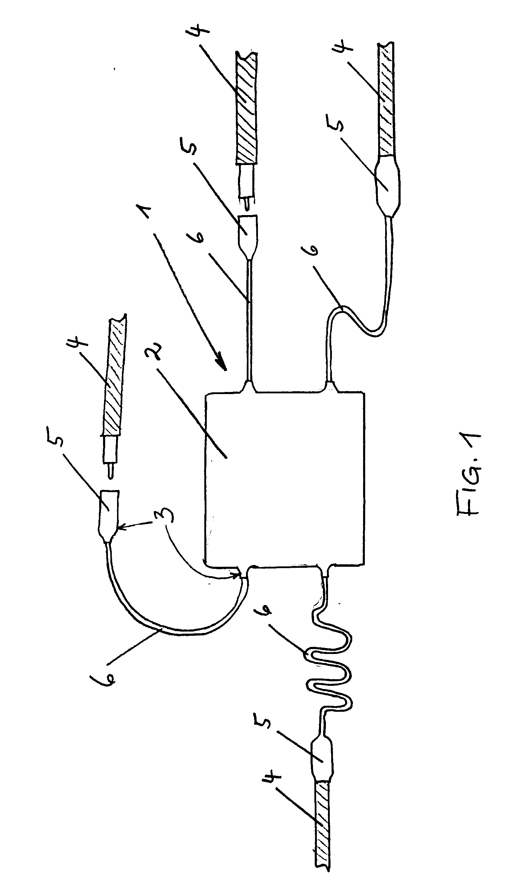

Die in Fig. 1 dargestellte erfindungsgemäße Anschlußarmatur 1 weist ein Gehäuse 2 sowie vier Anschlußeinheiten 3 auf, die im dargestellten Falle alle vier aus Verbindungskabeln 6 mit Anschlußmuffen 5 zur Einführung des Breitbandkabels 4 bestehen. Selbstverständlich kann die Anzahl der Anschlußeinheiten pro Armatur auch irgendeine andere sein, und es müssen auch nicht alle Anschlußeinheiten gemäß der vorliegenden Erfindung als Verbindungskabel 6 mit Anschlußmuffen 5 ausgeführt sein. Beispielsweise können die Hauptkabelanschlüsse herkömmliche starre Anschlußverbindungen sein, bei denen die Kabelstärke an keiner Stelle reduziert ist, und nur die Abzweigungen können erfindungsgemäß ausgeführt sein.

Als Anschlußeinheit 3 wird dabei im Rahmen der vorliegenden Verbindung die Gesamtheit aller zur Herstellung einer elektrischen Verbindung der Schalteinheit im Inneren der Armatur mit einem Breitband-Koaxialkabel erforderlichen elektrischen und mechanischen Teile verstanden. Die meisten dieser Teile sind daher bekannte Teile bzw. analog zu bekannten Teilen gestaltet. Die Besonderheit der erfindungsgemäßen Anschlußeinheiten liegt darin, daß zwischen dem Gehäuse der Armatur und der Anschlußmuffe 5, die der eigentlichen Verbindung mit dem Breitband-Koaxialkabel dient, ein flexibles Verbindungskabel 6 zwischengeschaltet ist. Dieses flexible Verbindungskabel 6 weist die für eine Bodenverlegung erforderlichen Eigenschaften auf, nämlich gegen mögliche äußere Beschädigungen geschützt zu sein und so ausgelegt zu sein, daß möglicherweise auftretende Zug-und Biegebeanspruchungen ohne Kabelbeschädigung aufgenommen werden können. Verglichen mit dem Breitbandkabel ist das eigentliche Koaxialkabel aus Innen- und Außenleiter jedoch unterschiedlich ausgeführt. So kann im Extremfall bei gleicher Außendicke des Verbindungskabels dieses dadurch flexibler sein als das Breitband-Koaxialkabel, daß der Außenleiter in Form eines Gewebes oder Geflechts ausgeführt und/oder der Innenleiter dünner ausgeführt ist; in der Regel ist jedoch, gegebenenfalls zusätzlich, das eigentliche Koaxialkabel, gemessen am Durchmesser des Außenleiters, deutlich dünner als das Breitband-Koaxialkabel, so daß die gewünschte Flexibilität erhalten wird. Als flexibel im Sinne der vorliegenden Erfindung wird ein Verbindungskabel dann bezeichnet, wenn es von Hand ohne Schwierigkeiten gekrümmt werden kann, wobei die dabei erzeugten Krümmungen unter etwa gleicher Krafteinwirkung reversibel sein sollten. Ein gewählter Krümmungsradius ist bei mäßiger Krafteinwirkung leicht veränderlich, und Kabelschlaufen verkleinern oder vergrößern sich reversibel unter entsprechender Krafteinwirkung. Das Verbindungskabel kann somit ein weiches Kabel ohne eigene innere Steifheit sein, kann jedoch, bevorzugt, eine gewisse innere Steifheit aufweisen, die dazu führt, daß Verformungen plastische reversible Verformungen sind und das Verbindungskabel sich in einer gewünschten Richtung selbst genügend stabil hält. Der Kabelaufbau an sich ist konventionell. Um den Schutz des Kabels gegen äußere Einwirkungen zu verbessern, wie sie beim Auffüllen von Erdreich nach der Kabelverlegung oder bei den Kabelbewegungen unter dem Einfluß von Temperaturschwankungen und von Erdbewegungen auftreten, können die Verbindungskabel noch mit einer besonderen Ummantelung versehen sein, die beispielsweise aus einem weichen Elastomeren oder Schaumstoff besteht, die die erforderliche chemische Beständigkeit unter den Verlegungsbedingungen aufweisen. Eine solche Ummantelung beeinflußt die Flexibilität und die elektrischen Eigenschaften nicht oder nicht wesentlich, schützt jedoch das Verbindungskabel.

Das Verbindungskabel kann ein glattes langgestrecktes Kabel sein, kann jedoch zur Vergrößerung seiner Dehnfähigkeit in Längsrichtung auch in sich schraubenförmig gewunden oder gewellt oder gefaltet sein.

Das Verbindungskabel 6 kann mit dem Gehäuse 2 genau wie mit der Anschlußmuffe 5 entweder dauerhaft oder lösbar verbunden sein. Unter einer dauerhaften Verbindung wird dabei eine Verbindung verstanden, bei der das ummantelte Gehäuse 2 und das Verbindungskabel 6 eine vorgefertigte, gas- und feuchtigkeitsdicht isolierte Einheit bilden, wobei die eigentliche Anschlußtechnik des Verbindungskabels 6 an der Schalteinheit im Gehäuse beliebig sein kann. So ist eine direkte feste Verdrahtung genauso denkbar wie eine bekannte durch Aufschrumpfen abgedichtete Steckverbindung, wie sie bisher zur Verbindung der Breitbandkabel mit den Verteilern/Abzweigern verwendet wurde. Soweit die elektrischen Randbedingungen das zulassen, kann dabei aufgrund der Verminderung der am Gehäuse mündenden Kabeldurchmesser die gesamte Anschlußarmatur gegenüber bekannten Armaturen verkleinert ausgeführt sein. Es kann natürlich aber auch ein bekanntes Gehäuse in unveränderter Form verwendet werden. Diese Ausführungsform, bei der die Verbindungskabel dauerhaft mit dem Gehäuse verbunden sind, ist bevorzugt, da dann bei der Montage nur noch die übliche Anzahl von Verbindungsvorgängen durch Einstecken der abgesetzten Breitbandkabel in die am Ende der Verbindungskabel 6 befindlichen Anschlußmuffen und durch Abdichtung der hergestellten Verbindungen durchgeführt werden müssen. Dadurch daß die Anschlußmuffen zu den Kabelenden hingebogen werden können, ergibt sich eine erhebliche Erleichterung der Montage. Dabei können die Verbindungen nacheinander hergestellt und abgedichtet werden, da sie durch einfaches Wegbiegen voneinander separiert werden können.

Wenn z B. jedoch eine besonders hohe Variabilität für besonders schwierige Verlegungsbedingungen gewünscht wird, kann die Verbindung der Verbindungskabel 6 mit dem Armaturengehäuse 2 auch lösbar ausgeführt sein. Grundsätzlich kommen alle bekannten, eine ausreichende Abdichtung liefernden Verbindungsweisen in Betracht. Da zuerst nur die relativ kurzen flexiblen Verbindungskabel am Gehäuse befestigt werden können, können ohne weiteres Einschraubverbindungen vorgesehen werden. Genauso sind jedoch Steckverbindungen verwendbar, beispielsweise solche gemäß DE-OS 33 26 128. Wenn diese durch Aufschrumpfen abgedichtet werden sollen, treten bei Verwendung üblicher Armaturen jedoch die eingangs erläuterten Nachteile teilweise wieder auf. Werden an die Erfindung besonders angepaßte Gehäuse verwendet, ist es bei gleichen Außenabmessungen wie bei herkömmlichen Gehäusen jedoch möglich, aufgrund der verminderten Kabeldurchmesser den Abstand zwischen den Kabelanschlüssen am Gehäuse zu vergrößern, was ebenfalls die Möglichkeit eröffnet, die dünneren Kabel durch Aufschrumpfen eines Schrumpfschlauches einzeln abzudichten.

Auch die Anschlußmuffe ist vorzugsweise vorgefertigt und bereits mit einer Schrumpfmuffe versehen, fest mit dem Verbindungskabel verbunden, und die Verbindung des Breitbandkabels mit der Anschlußmuffe erfolgt genau wie die direkte Verbindung des Breitbandkabels mit den Armaturen des Standes der Technik. Die Anschlußmuffen können so gestaltet sein, daß eine Zugentlastung nach Herstellung der Verbindung erhalten wird, z.B. gemäß DE-OS 34 36 635 oder durch Anbringen eines gesonderten Bügels oder einer gesonderten Kapsel. Das Breitbandkabel kann auch unter Verwendung einer Anschlußvorrichtung gemäß DE-OS 33 26 128 in die Anschlußmuffe eingeschoben werden, oder eine derartige Anschlußvorrichtung in Form einer Steckhülse kann bereits in der Anschlußmuffe vormontiert sein.

In der beschriebenen einfachsten Form werden bereits gegenüber herkömmlichen Armaturen erhebliche Vorteile erhalten. Diese Vorteile werden noch vergrößert, wenn man an oder in Verbindung mit der Anschlußarmatur besondere Halteelemente zur Fixierung und Ordnung mehrerer Anschlußeinheiten 3 bzw. genauer mehrerer Verbindungskabel 6 vorsieht. Diese Halteelemente können beispielsweise in Form von elastischen Angüssen direkt auf der Außenisolierung des Gehäuses 2 angeordnet sein, und zwar so, daß die Verbindungskabel 6 einfach zwischen zwei derartige elastische Halteelemente eingedrückt und dann von diesen gehalten werden. Wenn diese Halteelemente auf einem geraden Steg nebeneinander angeordnet sind, kann dadurch eine gute Parallelführung der einzelnen Verbindungskabel erhalten werden. Die Halteelemente können jedoch auch beispielsweise kreisförmig auf dem Gehäuse angeordnet sein, so daß eine Fixierung der Kabel in jede beliebige Richtung möglich ist. Dazu ist vorzugsweise die Zahl der Halteelemente größer als die maximale Zahl der Verbindungskabel, so daß ausreichend Wahlmöglichkeiten für die Anordnung der Verbindungskabel im Raum bestehen.

Wenn, wie bevorzugt und in Fig. 2 angedeutet, die Verbindungskabel so in die Halteelemente 7 eingelegt werden, daß Schlaufen gebildet werden, und wenn ferner die Haltekraft eine solche ist, daß beim Einwirken einer bestimmten Mindestkraft in Kabelrichtung das Kabel in den Halteelementen zu rutschen beginnt, kann die durch die Schlaufenbildung vorgegebene Bewegungsreserve ausgenutzt werden, so daß die auf die elektrischen Verbindungen einwirkenden und am Gehäuse auftretenden Zugkräfte stark vermindert werden. Die Halteelemente selbst führen dabei zu einer zusätzlichen Zugentlastung. Wenn sie so ausgestaltet werden, daß die Verbindungskabel normalerweise nicht rutschen können, beispielsweise indem die Haltelemente als Klemmen ausgestaltet sind, können Zugkräfte völlig von den elektrischen Verbindungen am Gehäuse ferngehalten werden. Diese können dann schwächer ausgebildet sein.

Bei der beschriebenen Ausführungsform sind die Halteelemente direkt als Teile des Armaturengehäuses ausgebildet. Es ist jedoch ohne weiteres möglich, sie ganz oder teilweise an zugeordneten Hilfsteilen vorzusehen, beispielsweise auf unterlegten oder aufgelegten Rechen oder kreisförmigen Verteilern. Es ist ferner ohne weiteres auch möglich, ein einfaches zusätzliches äußeres Schutzgehäuse um die eigentliche Armatur und die Verbindungskabel vorzusehen, das sehr einfach ausgeführt sein kann, beispielsweise aus einem geeigneten Kunststoff, da es nur äußere Einwirkungen fernhalten soll. Dieses Schutzgehäuse kann dabei auch die Funktion der Halteelemente ganz oder teilweise erfüllen, indem in ihm geeignete Klemmöglichkeiten vorgesehen sind.

Die erfindungsgemäße Anschlußarmatur ermöglicht eine vergleichsweise einfache Montage von Breitband-Koaxialkabeln auf kleinräumige Weise, da das Gerät selbst keinen unnötigen Kabelweg entsprechend dem Krümmungsradius der Breitband-Koaxialkabel verbraucht. Dadurch vermindert sich die für die Montage erforderliche Arbeitszeit, das Aufschrumpfen zur Herstellung dichter Verbindungen vereinfacht sich, die inhärenten, auf einfache Weise vorsehbaren Bewegungsreserven vermindern Zugbelastungen, und bei der Auslegung der eigentlichen Armatur müssen die beim Aufschrumpfen auftretenden erhöhten Temperaturen nicht im Sinne einer Temperaturfestigkeit berücksichtigt werden. Da, sowohl was die eigentliche Anschlußarmatur bzw. deren Gehäuse angeht, als auch was die Verbindungen zwischen Verbindungskabel und Gehäuse bzw. Anschlußmuffe und Breitbandkabel angeht, auf bekannte handelsübliche Teile zurückgegriffen werden kann, erfordert die Einführung der erfindungsgemäßen Anschlußarmaturen keine tiefgreifenden Umstellungen der üblichen Ausrüstungen und Arbeitstechniken.

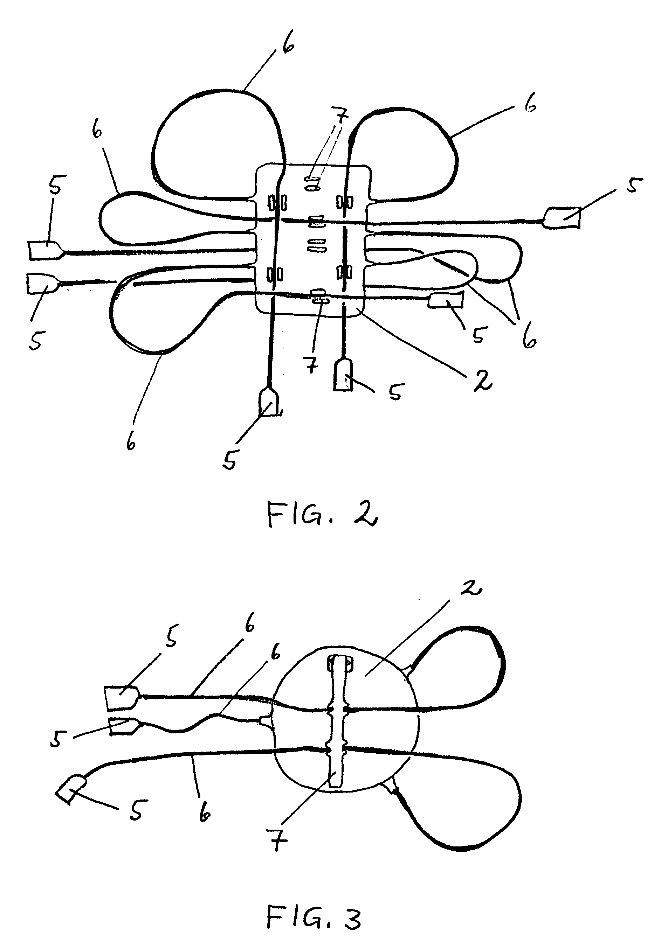

Abweichend zu Figur 2 und 3 kann die Anordnung der Verbindungskabel und/oder der Strecken- oder Breitbandkoaxialkabel derart sein, daß, nicht wie in Figur 2 dargestellt, die elastischen Verbindungskabel 6, sondern die Anschlußmuffen 5 oder gar die Breitbandkoaxialkabel 4 in den Zugentlastungseinrichtungen 7 gehalten werden, die bei der Ausführungsform nach Ffig. 2,3 als an der Außenseite des Armaturgehäuses vorgesehene Halteelemente ausgebildet sind, in die die Koaxialkabel 4 eingeklemmt werden können. An diesen der Zugentlastung dienenden Halteelementen 7 können gegebenenfalls auch die Anschlußmuffen 5 selbst eingesteckt werden.

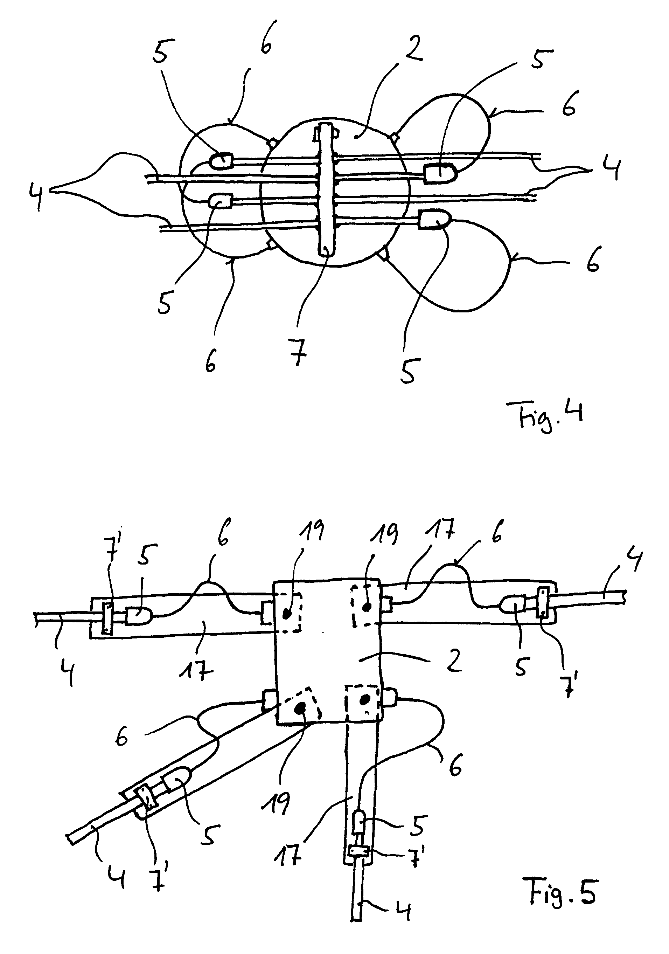

Bei der Ausführungsform nach Figur 4 wird die Zugentlastungseinrichtung beispielsweise ebenfalls durch Halte- oder Fixierelemente beispielsweise in Form eines festschraubbaren Bügels 7 verwandt, die die Koaxialkabel 4 zur Zugentlastung festklemmen. Abweichend zu Figur 4 können die Zugaufnahme-Befestigungseinrichtungen nicht am Armaturengehäuse 2, sondern an einer davon unabhängigen Verankerungseinheit angebracht sein. Bei der Ausführungsform nach Figur 2 kann dazu beispielsweise eine Mauer, eine Wand, eine Montageplatte oder andere geeignete Maßnahmen dienen, an denen beispielsweise auch das Armaturengehäuse 2 befestigt ist.

Nachfolgend wird auf Figur 5 Bezug genommen, in der am Armaturengehäuse zumindest einige der Zugentlastung dienende Haltebügel 17 gelenkig befestigt sind. Auch bei dieser Ausführungsform könnten in obenstehend geschilderter Weise zunächst einmal die zu verlegenden Koaxialkabel 4 vorbereitet und elektrisch und mechanisch fest, abgesichert und abgeschirmt über die Anschlußarmaturen 5 mit den elastischen Verbindungskabeln 6 verbunden werden. Danach werden an den Haltebügeln 17 zur Zugentlastung die ankommenden bzw. weggehenden Koaxialkabel 4 mechanisch fest gesichert, beispielsweise über einen festdrehbaren Schellen-Klemmverschluß 7', der am Haltebügel 17 sitzt. Diese Arbeiten können problemlos und günstig einzeln für jedes Koaxialkabel durchgeführt werden, da während der Montage zunächst einmal durch das elastische Verbindungskabel die Montage ohne Platzbeengung und ohne auf das Armaturengehäuse eingeleitete Spannungskräfte durch in Schlaufen gelegte relativ starre Koaxialkabel vorgenommen werden kann. Nach Herstellung der elektrischen Verbindung kann bei nach außen geschwenktem Haltebügel 17 zur Erzielung eines maximalen freien unbeengten Montageraumes nunmehr auch noch die mechanische Verankerung zur Zugentlastung bevorzugt am Koaxialkabel 4 vorgenommen werden, um dann den Haltebügel 17 in die gewünschte Endlage beispielsweise wieder in Parallelausrichtung zu den anderen Bügeln zurückzuschwenken. In dieser zurückgeschwenkten Lage kann gegebenenfalls durch eine nicht näher gezeigte Schraub- oder Klemmeinrichtung der Haltebügel 17 fixiert werden. Mit 19 sind die Verschwenkachsen bezeichnet.

Bei der Verwendung von verschwenkbaren Haltebügeln 17 ist ferner ersichtlich, daß durch die Klemmeinrichtungen zur Befestigung vor allem der Strecken-Koaxialkabel nicht nur eine Zug-, sondern auch eine Schubspannung aufgenommen werden kann. Darüber hinaus können auch Fixierelemente für die Aufnahme von Zug- und/oder Schubspannungen eines Innenleiters auch gegenüber einem Außenleiter vorgesehen sein.

Abweichend von den vorstehend erwähnten Haltebügeln 17, die im Querschnitt jede beliebige Form, beispielsweise auch Stabform, Halbrohrform aufweisen können, können auch bewegbare eine Zugspannung aufnehmende Elemente vorgesehen sein, wie beispielsweise ein Drahtseil, eine Kette etc., die an der einen Seite an einem Verankerungsteil, beispielsweise dem Armaturengehäuse und an der gegenüberliegenden Seite beispielsweise über eine Schelle am Ende eines Strecken-Koaxialkabels befestigt werden können. Da das biegbare Verbindungskabel 6 beispielsweise eine größere Länge als die Kette oder das Drahtseil zur Aufnahme der Schubspannung aufweist, werden also die Zugkräfte allein hierüber und nicht über das biegbare Verbindungskabel 6 aufgenommen.

Abschließend wird noch angemerkt, daß insbesondere bei Verwendung von zumindest weitgehend starren Haltebügeln 17 auch Verbindungskabeln 6 verwendet werden könnten, die nicht auf ihrer vollen Länge flexibel, sondern zumindest gegenüber ihrer Verankerung und dem Armaturengehäuse verschwenkbar ausgeführt sein müssen, so daß die gegebenenfalls am Haltebügel 17 mitgeführten und daran befestigbaren Verbindungskabel von einer viel Platz gewährenden Bearbeitungsposition in eine endgültige Ausrichtposition verschwenkt werden können. Insoweit ist unter dem Begriff "flexibles Verbindungskabel 6" auch ein zumindest gegenüber dem Armaturengehäuse verschwenkbares oder nur auf einer Teillänge oder an bestimmten Stellen biegbares Verbindungskabel zu verstehen.

Bei dem flexiblen Verbindungskabel 6 kann es sich auch um ein hochflexibles Kabel handeln, das Biegeradien von weniger als 50 mm, vorzugsweise auch weniger als 40 mm, 30 mm oder sogar 20 mm erlaubt. Dabei sollen die vorgenannten Kleinbiegeradien auch bei mehrmaligem Biegen des flexiblen Verbindungskabels 6 möglich sein.

Abschließend wird angemerkt, daß nicht nur ein abgesetztes Strecken-Kabel in eine Anschlußmuffe 5, die gegebenenfalls mit einer Steckhülse vorbereitet sein kann, einsteckbar ist, sondern daß auf das abgesetzte Strecken-Koaxialkabel auch zunächst ein Kabelendstecker aufgesteckt und dann diese Einheit in die Anschlußmuffe eingesteckt werden kann.

**Patentansprüche**

**Patentansprüche für folgende Vertragsstaaten : BE, NL**

1. Anschlußarmatur für Breitband-Koaxialkabel mit einem eine Schalteinheit enthaltenden abgedichteten abschirmenden Gehäuse (2) und mindestens einer Anschlußeinheit (3) mit einer Kontakteinrichtung für die Einführung eines abgesetzten Endes eines Breitband-Koaxialkabels (4) sowie Mitteln zur gas-und feuchtigkeitsdichten Verbindung des eingeführten Breitband-Koaxialkabels (4) mit der Anschlußeinheit (3), dadurch **gekennzeichnet,** daß mindestens eine Anschlußeinheit (3) eine Anschlußmuffe (5) für die Einführung des Endes des Breitband-Koaxialkabels (4) aufweist, die mit dem Gehäuse (2) über ein flexibles Verbindungskabel (6) verbunden ist.

2. Anschlußarmatur nach Anspruch 1, dadurch gekennzeichnet, daß das Verbindungskabel (6) lös- und auswechselbar mit dem Gehäuse (2) verbunden ist.

3. Anschlußarmatur nach Anspruch 1, dadurch gekennzeichnet, daß das Verbindungskabel (6) dauerhaft gas- und feuchtigkeitsdicht, beispielsweise durch gemeinsames Umspritzen, mit dem Gehäuse (2) verbunden ist.

4. Anschlußarmatur nach einem der Ansprüche 1 bis 3, dadurch gekennzeichnet, daß an der Außenisolierung des Gehäuses angeordnet und/oder mit dem Gehäuse in einer lösbaren Verbindung stehend Halteelemente (7) für eine Fixierung und/oder Ordnung mindestens eines Verbindungskabels (6) vorgesehen sind.

5. Anschlußarmatur nach Anspruch 4, dadurch gekennzeichnet, daß die Halteelemente (7) auf dem Gehäuse angeordnete elastische Klemmen sind.

6. Anschlußarmatur nach Anspruch 4, dadurch gekennzeichnet, daß die Halteelemente (7) mit Schließbügeln versehene Kabelrechen zum Einklemmen der Verbindungskabel sind.

7. Anschlußarmatur nach einem der Ansprüche 4 bis 6, dadurch gekennzeichnet, daß die Anzahl der Halteelemente (7) die Anzahl der Verbindungskabel (6) übersteigt.

8. Anschlußarmatur nach einem der vorausgehenden Ansprüche, dadurch gekennzeichnet, daß die flexiblen Verbindungskabel (6), verglichen mit dem Breitband-Koaxialkabel, Koaxialkabel mit einem verringerten Durchmesser sind, deren Außenleiter aus einem biegsamen Rohr oder einem Geflecht bestehen.

9. Anschlußarmatur nach einem der vorausgehenden Ansprüche, dadurch gekennzeichnet, daß die flexiblen Verbindungskabel (6) eine äußere weiche Ummantelung zum Schutz gegen mechanische Einwirkungen aufweisen.

10. Anschlußarmatur nach Anspruch 9, dadurch gekennzeichnet, daß die äußere weiche Ummantelung aus einem gegen die Umgebungsbedingungen am Verlegungsort chemisch haltbaren weichen Elastomeren oder Kunststoffschaum besteht.

11. Anschlußarmatur nach einem der vorausgehenden Ansprüche, dadurch gekennzeichnet, daß zusätzlich ein äußeres Schutzgehäuse zum mechanischen Schutz der Verbindungskabel nach deren Verbindung mit den Breitband-Koaxialkabeln sowie gegebenenfalls ihrer zusätzlichen Fixierung vorgesehen ist.

12. Anschlußarmatur nach Anspruch 11, dadurch gekennzeichnet, daß das Schutzgehäuse die Halteelemente (7) teilweise oder ganz enthält.

13. Anschlußarmatur nach einem der Ansprüche 1 bis 12, dadurch gekennzeichnet, daß die Anschlußmuffe (5) mit einer Schrumpfmuffe in Form eines einseitigen auf das Verbindungskabel (6) aufgeschrumpften Schrumpfschlauchs versehen ist.

14. Anschlußarmatur nach einem der Ansprüche 1 bis 13, dadurch gekennzeichnet, daß in der Anschlußmuffe (5) vormontiert eine Steckhülse zum Einstecken eines Endes des von seiner Außenisolierung befreiten, abgesetzten Breitband-Koaxialkabels (4) angeordnet ist.

15. Anschlußarmatur nach einem der Ansprüche 1 bis 14, dadurch gekennzeichnet, daß für das zumindest eine BreitbandKoaxialkabel (4) eine Zugentlastungseinrichtung vorgesehen ist.

16. Anschlußarmatur nach einem der Ansprüche 1 bis 15, dadurch gekennzeichnet, daß die Zugentlastungseinrichtung zum einen an der Ummantelung und/oder am Außenleiter an einem abgesetzten Bereich des Breitband-Koaxialkabels (4) und/oder an der Anschlußmuffe (5) und/oder an dem flexiblen Verbindungskabel (6) und am anderen Ende an einem Verankerungselement vorzugsweise dem Armaturen- oder einem davon getrennten Schutzgehäuse mechanisch verankert ist.

17. Anschlußarmatur nach Anspruch 15 oder 16, dadurch gekennzeichnet, daß die Zugentlastungseinrichtung aus einer über eine maximale Wegstrecke nicht verlängerbare, nichtelastisches aber biegbares Zugelement, vorzugsweise in Form eines Drahtseiles, einer Kette, eines Biegestückes etc. ausgebildet ist.

18. Anschlußarmatur nach Anspruch 15 oder 16, dadurch gekennzeichnet, daß die Zugentlastungseinrichtung aus einem zumindest weitgehend starren Haltebügel(17) besteht, der über eine Verankerungsstelle, vorzugsweise das Armaturen- oder ein das Armaturengehäuse umgebendes Schutzgehäuse diesem gegenüber verschwenk-, verstell- oder biegbar gehalten ist.

19. Anschlußarmatur nach Anspruch 15 oder 16, dadurch gekennzeichnet, daß die Zugentlastungseinrichtung auf dem Armaturengehäuse (2) oder einem es umgebenden Schutzgehäuse als Halte- oder Klemmeinrichtung (7) ausgebildet ist.

20. Anschlußarmatur nach Anspruch 18 oder 19, dadurch gekennzeichnet, daß der starre und verschwenkbare bzw. verstellbare Haltebügel (17) der Zugentlastungseinrichtung in einer vorwählbaren Lage fest arretierbar ist.

21. Anschlußarmatur nach einem der Ansprüche 1 bis 16 oder 18 bis 20, dadurch gekennzeichnet, daß ferner eine Innenleiterzugentlastungs- oder -schubentlastungseinrichtung vorgesehen ist, die ein auf den abisolierten Bereich eines vorstehenden Innenleiters aufgesetztes und befestigtes Stoppelement umfaßt, welches sich zumindest mittelbar gegenüber dem Dielektrikum zwischen Innen- und Außenleiter und/oder dem Außenleiter des Breitband-Koaxialkabels (4) bzw. einem Anschlußelement des Haltebügels (17) abstützt.

22. Anschlußarmatur nach einem der Ansprüche 1 bis 21, dadurch gekennzeichnet, daß die Anschlußmuffe (5) vorzugsweise durch eine vormontierte Steckhülse zum Einstecken eines mit einem Kabelendsteckers versehenen Breitband-Koaxialkabels (4) geeignet ist.

23. Anschlußarmatur nach einem der Ansprüche 1 bis 22, dadurch gekennzeichnet, daß das flexible Verbindungskabel (6) einen Biegeradius von weniger als 50 mm, 40 mm, 30 mm, vorzugsweise sogar weniger als 20 mm ermöglicht.

24. Anschlußarmatur nach Anspruch 23, dadurch gekennzeichnet, daß das flexible Verbindungskabel (6) auch bei mehrmaligem Biegen Biegeradien von weniger als 50 mm, 40 mm, 30 mm, vorzugsweise 20 mm erlaubt.

**Patentansprüche für folgenden Vertragsstaat : DE**

1. Anschlußarmatur für Breitband-Koaxialkabel mit einem eine Schalteinheit enthaltenden abgedichteten abschirmenden Gehäuse (2) und mindestens einer Anschlußeinheit (3) mit einer Kontakteinrichtung für die Einführung eines abgesetzten Endes eines Breitband-Koaxialkabels (4) sowie Mitteln zur gas- und feuchtigkeitsdichten Verbindung des eingeführten Breitband-Koaxialkabels (4) mit der Anschlußeinheit (3),
dadurch **gekennzeichnet,** daß
mindestens eine Anschlußeinheit (3) eine Anschlußmuffe (5) für die Einführung des Endes des Breitband-Koaxialkabels (4) aufweist, die mit dem Gehäuse (2) über ein flexibles Verbindungskabel (6) verbunden ist, und daß an der Außenisolierung des Gehäuses angeordnet und/oder mit dem Gehäuse in einer lösbaren Verbindung stehend Halteelemente (7) für eine Fixierung und/oder Ordnung mindestens eines Verbindungskabels (6) vorgesehen sind.

2. Anschlußarmatur nach Anspruch 1, dadurch gekennzeichnet, daß das Verbindungskabel (6) lös- und auswechselbar mit dem Gehäuse (2) verbunden ist.

3. Anschlußarmatur nach Anspruch 1, dadurch gekennzeichnet, daß das Verbindungskabel (6) dauerhaft gas- und feuchtigkeitsdicht, beispielsweise durch gemeinsames Umspritzen, mit dem Gehäuse (2) verbunden ist.

4. Anschlußarmatur nach Anspruch 1, 2 oder 3, dadurch gekennzeichnet, daß die Halteelemente (7) auf dem Gehäuse angeordnete elastische Klemmen sind.

5. Anschlußarmatur nach einem der Ansprüche 1 bis 4, dadurch gekennzeichnet, daß die Halteelemente (7) mit Schließbügeln versehene Kabelrechen zum Einklemmen der Verbindungskabel sind.

6. Anschlußarmatur nach einem der Ansprüche 1 bis 5, dadurch gekennzeichnet, daß die Anzahl der Hateelemente (7) die Anzahl der Verbindungskabel (6) übersteigt.

7. Anschlußarmatur nach einem der vorausgehenden Ansprüche, dadurch gekennzeichnet, daß die flexiblen Verbindungskabel (6), verglichen mit dem Breitband-Koaxialkabel, Koaxialkabel mit einem verringerten Durchmesser sind, deren Außenleiter aus einem biegsamen Rohr oder einem Geflecht bestehen.

8. Anschlußarmatur nach einem der vorausgehenden Ansprüche, dadurch gekennzeichnet, daß die flexiblen Verbindungskabel (6) eine äußere weiche Ummantelung zum Schutz gegen mechanische Einwirkungen aufweisen.

9. Anschlußarmatur nach Anspruch 8, dadurch gekennzeichnet, daß die äußere weiche Ummantelung aus einem gegen die Umgebungsbedingungen am Verlegungsort chemisch haltbaren weichen Elastomeren oder Kunststoffschaum besteht.

10. Anschlußarmatur nach einem der vorausgehenden Ansprüche, dadurch gekennzeichnet, daß zusätzlich ein äußeres Schutzgehäuse zum mechanischen Schutz der Verbindungskabel nach deren Verbindung mit den Breitband-Koaxialkabeln sowie gegebenenfalls ihrer zusätzlichen Fixierung vorgesehen ist.

11. Anschlußarmatur nach Anspruch 10, dadurch gekennzeichnet, daß das Schutzgehäuse die Halteelemente (7) teilweise oder ganz enthält.

12. Anschlußarmatur nach einem der Ansprüche 1 bis 11, dadurch gekennzeichnet, daß die Anschlußmuffe (5) mit einer Schrumpfmuffe in Form eines einseitigen auf das Verbindungskabel (6) aufgeschrumpften Schrumpfschlauchs versehen ist.

13. Anschlußarmatur nach einem der Ansprüche 1 bis 12, dadurch gekennzeichnet, daß in der Anschlußmuffe (5) vormontiert eine Steckhülse zum Einstecken eines Endes des von seiner Außenisolierung befreiten, abgesetzten Breitband-Koaxialkabels (4) angeordnet ist.

14. Anschlußarmatur nach einem der Ansprüche 1 bis 13, dadurch gekennzeichnet, daß für das zumindest eine Breitband-Koaxialkabel (4) eine Zugentlastungseinrichtung vorgesehen ist.

15. Anschlußarmatur nach einem der Ansprüche 1 bis 14, dadurch gekennzeichnet, daß die Zugentlastungseinrichtung zum einen an der Ummantelung und/oder am Außenleiter an einem abgesetzten Bereich des Breitband-Koaxialkabels (4) und/oder an der Anschlußmuffe (5) und/oder an dem flexiblen Verbindungskabel (6) und am anderen Ende an einem Verankerungselement vorzugsweise dem Armaturen- oder einem davon getrennten Schutzgehäuse mechanisch verankert ist.

16. Anschlußarmatur nach Anspruch 14 oder 15, dadurch gekennzeichnet, daß die Zugentlastungseinrichtung aus einer über eine maximale Wegstrecke nicht verlängerbare, nichtelastisches aber biegbares Zugelement, vorzugsweise in Form eines Drahtseiles, einer Kette, eines Biegestückes etc. ausgebildet ist.

17. Anschlußarmatur nach Anspruch 14 oder 15, dadurch gekennzeichnet, daß die Zugentlastungseinrichtung aus einem zumindest weitgehend starren Haltebügel(17) besteht, der über eine Verankerungsstelle, vorzugsweise das Armaturen- oder ein das Armaturengehäuse umgebendes Schutzgehäuse diesem gegenüber verschwenk-, verstell- oder biegbar gehalten ist.

18. Anschlußarmatur nach Anspruch 14 oder 15, dadurch gekennzeichnet, daß die Zugentlastungseinrichtung auf dem Armaturengehäuse (2) oder einem es umgebenden Schutzgehäuse als Halte- oder Klemmeinrichtung (7) ausgebildet ist.

19. Anschlußarmatur nach Anspruch 17 oder 18, dadurch gekennzeichnet, daß der starre und verschwenkbare bzw. verstellbare Haltebügel (17) der Zugentlastungseinrichtung in einer vorwählbaren Lage fest arretierbar ist.

20. Anschlußarmatur nach einem der Ansprüche 1 bis 15 oder 17 bis 19, dadurch gekennzeichnet, daß ferner eine Innenleiterzugentlastungs- oder -schubentlastungseinrichtung vorgesehen ist, die ein auf den abisolierten Bereich eines vorstehenden Innenleiters aufgesetztes und befestigtes Stoppelement umfaßt, welches sich zumindest mittelbar gegenüber dem Dielektrikum zwischen Innen- und Außenleiter und/oder dem Außenleiter des Breitband-Koaxialkabels (4) bzw. einem Anschlußelement des Haltebügels (17) abstützt.

21. Anschlußarmatur nach einem der Ansprüche 1 bis 20, dadurch gekennzeichnet, daß die Anschlußmuffe (5) vorzugsweise durch eine vormontierte Steckhülse zum Einstecken eines mit einem Kabelendsteckers versehenen Breitband-Koaxialkabels (4) geeignet ist.

22. Anschlußarmatur nach einem der Ansprüche 1 bis 21, dadurch gekennzeichnet, daß das flexible Verbindungskabel (6) einen Biegeradius von weniger als 50 mm, 40 mm, 30 mm,, vorzugsweise sogar weniger als 20 mm ermöglicht.

23. Anschlußarmatur nach Anspruch 22, dadurch gekennzeichnet, daß das flexible Verbindungskabel (6) auch bei mehrmaligem Biegen Biegeradien von weniger als 50 mm, 40 mm, 30 mm, vorzugsweise 20 mm erlaubt.

**Claims**
**Claims for the following Contracting States :**
**BE, NL**

1. A connection fitting for a broad band coaxial cable comprising a screened sealed housing (2) containing a circuit unit, and at least one connection unit (3) with a contact device for the introduction of a set back end of a broad band coaxial cable (4) and means for providing a gastight and moisture-proof connection of the inserted with the connection unit (3), characterized in that at least one connection unit (3) has a connection sleeve (5) for the introduction of the end of the broad band coaxial cable (4), which unit is connected with the housing (2) by the intermediary of a flexible connecting cable (6).

2. The connection fitting as claimed in claim 1, characterized in that the connecting cable (6) is connected detachably and replaceably with the housing (2).

3. The connecting fitting as claimed in claim 1, characterized in that connecting cable (6) is permanently connected in a gas- and moisture-proof manner with the housing (2), for instance by molding them together.

4. The connecting fitting as claimed in claim 1, characterized in that holding elements (7) for fixing and/or arrangement of at least one connecting cable (6) are provided on the external insulation of the housing and/or detachably connected with it.

5. The connection fitting as claimed in claim 4, characterized in that the holding elements (7) are elastic cable gripping means arranged on the housing.

6. The connection fitting as claimed in claim 4, characterized in that the holding elements (7) are comb-like cable spacers provided with closing yokes for clamping the connecting cables.

7. The connection fitting as claimed in any one of the claims 4 through 6, characterized in that the number of holding elements (7) is greater than the number of connecting cables (6).

8. The connection fitting as claimed in any one of the preceding claims, characterized in that the flexible connecting cables (6) are coaxial cables having a smaller diameter than the broad band coaxial cable and whose external conductors consist of a flexible tube or a braided sheath.

9. The connection fitting as claimed in any one of the preceding claims, characterized in that the flexible connecting cables (6) have an external soft casing for protection against mechanical damage.

10. The connection fitting as claimed in claim 9, characterized in that the external soft casing consists of a soft elastomeric or synthetic resin foam chemically resistant to the environmental conditions where the cable is laid.

11. The connection fitting as claimed in any one of the preceding claims, characterized in that additionally an external protective housing is provided for the mechanical protection of the connecting cables after the connection thereof with the broad band coaxial cable and any additional fixing thereof.

12. The connection fitting as claimed in claim 11, characterized in that the protective housing partly or completely encases the holding elements (7).

13. The connection fitting as claimed in any one of the claims 1 through 12, characterized in that the connection sleeve (5) is provided with a shrink-on sheath in the form of shrink-on tubing adapted to be shrunk on one end of the connecting cable.

14. The connection fitting as claimed in any one of the claims 1 through 13, characterized in that a plug-in sleeve, which is pre-fitted in the connecting sleeve (5), is arranged for the insertion of one end of the set back broad band coaxial cable (4) freed of its external insulation.

15. The connection fitting as claimed in any one of the claims 1 through 14, characterized in that for the at least one broad band coaxial cable (4) a tensile stress relieving device is provided.

16. The connection fitting as claimed in any one of the claims 1 through 15, characterized in that the tensile stress relieving device is mechanically anchored on the one hand on the casing and/or on the external conductor on a set back part of the broad band coaxial cable (4) and/or on the connecting sleeve (5) and/or on the flexible connecting cable (6) and on the other end on an anchoring element, preferably the fitting housing or a protective housing separate from it.

17. The connection fitting as claimed in claim 15 or in claim 16, characterized in that the tensile stress relieving device is in the form of a tension transmitting element which is not able to be stretched past a maximum displacement, is non-elastic but flexible and is preferably in the form of a wire rope, a chain or flexible member or the like.

18. The connection fitting as claimed in claim 15 or in claim 16, characterized in that the tensile stress relieving device consists of an at least substantially rigid holding yoke (17) which by means of an anchoring means preferably the fitting housing or a surrounding the fitting housing is held pivotally, adjustably or flexibly in relation to the latter.

19. The connection fitting as claimed in claim 15 or in claim 16, characterized in that the tensile stress relieving device is formed on the fitting housing (2) or on a protective housing surrounding the same as a holding or gripping device (7).

20. The connection fitting as claimed in claim 18 or claim 19, characterized in that the rigid, pivoting or respectively adjustable holding yoke (17) of the tensile stress relieving device is able to be locked in a predetermined position.

21. The connection fitting as claimed in any one of the claims 1 through 15 or 18 through 20, characterized in that furthermore an internal conductor tension or thrust relieving device is provided, which comprises a stop element fixed and mounted on the part, free of insulation, of a projecting internal conductor, which stop element bears at least indirectly on the dielectric between the internal and the external conductors and/or the external conductor of the broad band coaxial cable (4) or respectively an connection element of the holding yoke (17).

22. The connection fitting as claimed in any one of the claims 1 through 21, characterized in that preferably by means of a pre-fitted male sleeve the connecting sleeve (5) is adapted for introduction of a broad band coaxial cable (4) provided with a cable end plug.

23. The connection fitting as claimed in any one of the claims 1 through 22, characterized in that the flexible connecting cable (6) renders possible a bend radius of less than 50 mm, 40 mm, 30 mm or preferably even less than 20 mm.

24. The connection fitting as claimed in claim 23, characterized in that the flexible connecting cable (6) renders possible a bend radius of less than 50 mm, 40 mm, 30 mm or preferably less than 20 mm in the case of repeated bending.

**Claims for the following Contracting State : DE**

1. A connection fitting for a broad band coaxial cable comprising a screened sealed housing (2) containing a circuit unit, and at least one connection unit (3) with a contact device for the introduction of a set back end of a broad band coaxial cable (4) and means for providing a gas-tight and moisture-proof connection of the inserted with the connection unit (3), characterized in that at least one connection unit (3) has a connection sleeve (5) for the introduction of the end of the broad band coaxial cable (4), which unit is connected with the housing (2) by the intermediary of a flexible connecting cable (6), and in that holding elements (7) for fixing and/or arrangement of at least one connecting cable (6) are provided on the external insulation of the housing and/or detachably connected with it.

2. The connection fitting as claimed in claim 1, characterized in that the connecting cable (6) is connected detachably and replaceably with the housing (2).

3. The connection fitting as claimed in claim 1, characterized in that connecting cable (6) is permanently connected in a gas- and moisture-proof manner with the housing (2), for instance by molding them together.

4. The connection fitting as claimed in claim 1, claim 2 or claim 3, characterized in that the holding elements (7) are elastic cable gripping means arranged on the housing.

5. The connection fitting as claimed in any one of the claims 1 through 4, characterized in that the holding elements (7) are comb-like cable spacers provided with closing yokes for clamping the connecting cables.

6. The connection fitting as claimed in any one of the claims 1 through 5, characterized in that the number of holding elements (7) is greater than the number of connecting cables (6).

7. The connection fitting as claimed in any one of the preceding claims, characterized in that the flexible connecting cables (6) are coaxial cables having a smaller diameter than the broad band coaxial cable and whose external conductors consist of a flexible tube or a braided sheath.

8. The connection fitting as claimed in any one of the preceding claims, characterized in that the flexible connecting cables (6) have an external soft casing for protection against mechanical damage.

9. The connection fitting as claimed in claim 8, characterized in that the external soft casing consists of a soft elastomeric or synthetic resin foam chemically resistant to the environmental conditions where the cable is laid.

10. The connection fitting as claimed in any one of the preceding claims, characterized in that additionally an external protective housing is provided for the mechanical protection of the connecting cables after the connection thereof with the broad band coaxial cable and any additional fixing thereof.

11. The connection fitting as claimed in claim 10, characterized in that the protective housing partly or completely encases the holding elements (7).

12. The connection fitting as claimed in any one of the claims 1 through 11, characterized in that the connection sleeve (5) is provided with a shrink-on sheath in the form of shrink-on tubing adapted to be shrunk on one end of the connecting cable.

13. The connection fitting as claimed in any one of the claims 1 through 12, characterized in that a plug-in sleeve, which is pre-fitted in the connecting sleeve (5), is arranged for the insertion of one end of the set back broad band coaxial cable (4) freed of its external insulation.

14. The connection fitting as claimed in any one of the claims 1 through 13, characterized in that for the at least one broad band coaxial cable (4) a tensile stress relieving device is provided.

15. The connection fitting as claimed in any one of the claims 1 through 14, characterized in that the tensile stress relieving device is mechanically anchored on the one hand on the casing and/or on the external conductor on a set back part of the broad band coaxial cable (4) and/or on the connecting sleeve (5) and/or on the flexible connecting cable (6) and on the other end on an anchoring element, preferably the fitting housing or a protective housing separate from it.

16. The connection fitting as claimed in claim 14 or in claim 15, characterized in that the tensile stress relieving device is in the form of a tension transmitting element which is not able to be stretched past a maximum displacement, is non-elastic but flexible and is preferably in the form of a wire rope, a chain or flexible member or the like.

17. The connection fitting as claimed in claim 14 or in claim 15, characterized in that the tensile stress relieving device consists of an at least substantially rigid holding yoke (17) which by means of an anchoring means preferably the fitting housing or a surrounding the fitting housing is held pivotally, adjustably or flexibly in relation to the latter.

18. The connection fitting as claimed in claim 14 or in claim 15, characterized in that the tensile stress relieving device is formed on the fitting housing (2) or on a protective housing surrounding the same as a holding or gripping device (7).

19. The connection fitting as claimed in claim 17 or claim 18, characterized in that the rigid, pivoting or respectively adjustable holding yoke (17) of the tensile stress relieving device is able to be locked in a predetermined position.

20. The connection fitting as claimed in any one of the claims 1 through 15 or 17 through 19, characterized in that furthermore an internal conductor tension or thrust relieving device is provided, which comprises a stop element fixed and mounted on the part, free of insulation, of a projecting internal conductor, which stop element bears at least indirectly on the dielectric between the internal and the external conductors and/or the external conductor of the broad band coaxial cable (4) or respectively an connection element of the holding yoke (17).

21. The connection fitting as claimed in any one of the claims 1 through 20, characterized in that preferably by means of a pre-fitted male sleeve the connecting sleeve (5) is adapted for introduction of a broad band coaxial cable (4) provided with a cable end plug.

22. The connection fitting as claimed in any one of the claims 1 through 21, characterized in that the flexible connecting cable (6) renders possible a bend radius of less than 50 mm, 40 mm, 30 mm or preferably even less than 20 mm.

23. The connection fitting as claimed in claim 22, characterized in that the flexible connecting cable (6) renders possible a bend radius of less than 50 mm, 40 mm, 30 mm or preferably less than 20 mm in the case of repeated bending.

**Revendications**
**Revendications pour les Etats contractants suivants : BE, NL**

1. Armature de raccordement pour câble coaxial à large bande, avec un boîtier (2) étanche et blindé contenant une unité de commutation et au moins une unité de raccordement (3) avec un dispositif de contact pour l'introduction d'une extrémité libre d'un câble coaxial à large bande (4) ainsi que des moyens pour l'assemblage de manière étanche aux gaz et à l'humidité du câble coaxial à large bande inséré (4) avec l'unité de raccordement (3), caractérisée en ce qu'au moins une unité de raccordement (3) comporte un manchon de raccordement (5) pour l'introduction de l'extrémité du câble coaxial à large bande (4), cette unité étant assemblée au boîtier (2) au moyen d'un câble de liaison flexible (6).

2. Armature de raccordement selon la revendication 1, caractérisée en ce que le câble de liaison (6) est assemblé de manière amovible et interchangeable au boîtier (2).

3. Armature de raccordement selon la revendication 1, caractérisée en ce que le câble de liaison (6) est assemblé de manière définitive et étanche aux gaz et à l'humidité au boîtier (2), par example par un enrobage commun.

4. Armature de raccordement selon la revendication 1 à 3, caractérisée en ce que, sur l'isolation extérieure du boîtier, sont disposés et/ou se trouvent des éléments de maintien (7) assemblés de manière amovible au boîtier qui permettent une fixation et/ou un rangement d'au moins un câble de liaison (6).

5. Armature de racorrdement selon la revendication 4, caractérisée en ce que les éléments de maintien (7) sont des pinces de serrage élastiques montées sur le boîtier.

6. Armature de racorrdement selon la revendication 4, caractérisée en ce que les éléments de maintien (7) sont des râteliers de câbles pourvus d'étriers de fermeture afin de serrer les câbles de liaison.

7. Armature de raccordement selon l'une des revendications 4 à 6, caractérisée en ce que le nombre des éléments de maintien (7) dépasse le nombre des câbles de liaison (6).

8. Armature de raccordement selon l'une des revendications précédentes, caractérisée en ce que les câbles de liaison flexibles (6) sont des câbles coaxiaux ayant un diamètre plus faible par comparaison avec les câbles coaxiaux à large bande et dont les conducteurs extérieurs sont constitués d'un tube flexible ou d'un élément tissé.

9. Armature de raccordement selon l'une des revendications précédentes, caractérisée en ce que les câbles de liaison flexibles (6) comportent une gaine souple extérieure assurant la protection contre les actions mécaniques.

10. Armature de raccordement selon la revendication 9, caractérisée en ce que la gaine souple extérieure est constituée d'élastomère ou de mousse de plastique molle résistant chimiquement aux conditions environnantes existant à l'endroit de la pose.

11. Armature de raccordement selon l'une des revendications précédentes, caractérisée en ce qu'un boîtier de protection extérieur est prévu en outre pour assurer la protection mécanique des câbles de liaison après leur assemblage aux câbles coaxiaux à large bande ainsi que, éventuellement, pour assurer leur fixation supplémentaire.

12. Armature de raccordement selon la revendication 11, caractérisée en ce que le boîtier de protection contient partiellement ou totalement les éléments de maintien (7).

13. Armature de raccordement selon l'une des revendications 1 à 12, caractérisée en ce que le manchon de raccordement (5) est pourvu d'un manchon rétractable sous forme d'un flexible rétractable placé d'un côté sur le câble de liaison (6).

14. Armature de raccordement selon l'une des revendications 1 à 13, caractérisée en ce qu'une douille d'embrochage est pré-montée dans le manchon de raccordement (5) pour l'insertion d'une extrémité du câble coaxial à large bande (4) libre débarrassé de son isolation extérieure.

15. Armature de raccordement selon l'une des revendications 1 à 14, caractérisée en ce qu' un dispositif de reprise des contraintes de traction est prévu pour au moins un câble coaxial à large bande (4).

16. Armature de raccordement selon l'une des revendications 1 à 15, caractérisée en ce que le dispositif de reprise des contraintes de traction est ancré mécaniquement d'une part à la gaine et/ou au conducteur extérieur dans une zone écartée du câble coaxial à large bande (4) et/ou au manchon de raccordement (5) et/ou au câble de liaison flexible (6) et, à l'autre extrémité, à un élément d'ancrage, de préférence au boîtier d'armature ou à un boîtier de protection séparé de celle-ci.

17. Armature de raccordement selon la revendication 15 ou 16, caractérisée en ce que le dispositif de reprise des contraintes de traction est constitué d'un élément de traction ne pouvant pas être allongé au-delà d'une longueur maximale non élastique mais flexible, de préférence sous forme d'un câble de fil, d'une chaîne, d'un élément flexible, etc.

18. Armature de raccordement selon la revendication 15 ou 16, caractérisée en ce que le dispositif de reprise des contraintes de traction est constitué d'un étrier de maintien (17) au moins rigide dans une large mesure qui est maintenu, avec possibilité de pivotement, de déplacement ou de flexion sur un point d'ancrage, de préférence sur le boîtier d'armature ou le boîtier de protection entourant le boîtier d'armature.

19. Armature de raccordement selon la revendication 15 ou 16, caractérisée en ce que le dispositif de reprise des contraintes de traction est constitué d'un dispositif de maintien ou de serrage (7) monté sur le boîtier d'armature (2) ou sur le boîtier de protection entourant celui-ci.

20. Armature de raccordement selon la revendication 18 ou 19, caractérisée en ce que l'étrier de maintien (17) rigide et pivotant ou déplaçable peut être arrêté de manière fixe dans une position prédéterminable par le dispositif de reprise des contraintes de traction.

21. Armature de raccordement selon l'une des revendications 1 à 16 ou 18 à 20, caractérisée en ce qu'il est prévu en outre un dispositif de reprise des contraintes de traction ou de cisaillement du conducteur intérieur qui comprend un élément d'arrêt fixé et monté sur la zone sans isolement d'un conducteur intérieur en saillie qui prend appui, au moins indirectement, vis-à-vis du diélectrique entre le conducteur intérieur et le conducteur extérieur et/ou le conducteur extérieur du câble coaxial à large bande (4) ou d'un élément de raccordement de l'étrier de maintien (17).

22. Armature de raccordement selon l'une des revendications 1 à 21, caractérisée en ce que le manchon de raccordement (5) convient pour l'insertion d'un câble coaxial à large bande (4) pourvu d'une fiche d'extrémité de câble, de préférence grâce à une douille d'embrochage pré-montée.

23. Armature de raccordement selon l'une des revendications 1 à 22, caractérisée en ce que le câble de liaison flexible (6) permet un rayon de flexion de moins de 50 mm, 40 mm, 30 mm, et de préférence même de moins de 20 mm.

24. Armature de raccordement selon la revendication 23, caractérisée en ce que le câble de liaison flexible (6) permet un rayon des flexions multiples avec des rayons de flexion inférieurs à 50 mm, 40 mm, 30 mm, et de préférence 20 mm.

**Revendications pour l'Etat contractant suivant : DE**

1. Armature de raccordement pour câble coaxial à large bande, avec un boîtier (2) étanche et blindé contenant une unité de commutation et au moins une unité de raccordement (3) avec un dispositif de contact pour l'introduction d'une extrémité libre d'un câble coaxial à large bande (4) ainsi que des moyens pour l'assemblage de manière étanche aux gaz et à l'humidité du câble coaxial à large bande inséré (4) avec l'unité de raccordement (3), caractérisée en ce qu'au moins une unité de raccordement (3) comporte un manchon de raccordement (5) pour l'introduction de l'extrémité du câble coaxial à large bande (4), cette unité étant assemblée au boîtier (2) au moyen d'un câble de liaison flexible (6) et en ce que, sur l'isolation extérieure du boîtier, sont disposés et/ou se trouvent des éléments de maintien (7) assemblés de manière amovible au boîtier qui permettent une fixation et/ou un rangement d'au moins un câble de liaison (6).

2. Armature de raccordement selon la revendication 1, caractérisée en ce que le câble de liaison (6) est assemblé de manière amovible et interchangeable au boîtier (2).

3. Armature de raccordement selon la revendication 1, caractérisée en ce que le câble de liaison (6) est assemblé de manière définitive et étanche aux gaz et à l'humidité au boîtier (2), par exemple par un enrobage commun.

4. Armature de raccordement selon la revendication 1, 2 ou 3, caractérisée en ce que les éléments de maintien (7) sont des pinces de serrage élastiques montées sur le boîtier.

5. Armature de raccordement selon l'une des revendications 1 à 4, caractérisée en ce que les éléments de maintien (7) sont des râteliers de câbles pourvus d'étriers de fermeture afin de serrer les câbles de liaison.

6. Armature de raccordement selon l'une des revendications 1 à 5, caractérisée en ce que le nombre des éléments de maintien (7) dépasse le nombre des câbles de liaison (6).

7. Armature de raccordement selon l'une des revendications précédentes, caractérisée en ce que les câbles de liaison flexibles (6) sont des câbles coaxiaux ayant un diamètre plus faible par comparaison avec les câbles coaxiaux à large bande et dont les conducteurs extérieurs sont constitués d'un tube flexible ou d'un élément tissé.

8. Armature de raccordement selon l'une des revendications précédentes, caractérisée en ce que les câbles de liaison flexibles (6) comportent une gaine souple extérieure assurant la protection contre les actions mécaniques.

9. Armature de raccordement selon la revendication 8, caractérisée en ce que la gaine souple extérieure est constituée d'élastomère ou de mousse de plastique molle résistant chimiquement aux conditions environnantes existant à l'endroit de la pose.

10. Armature de raccordement selon l'une des revendications précédentes, caractérisée en ce qu'un boîtier de protection extérieur est prévu en outre pour assurer la protection mécanique des câbles de liaison après leur assemblage aux câbles coaxiaux à large bande ainsi que, éventuellement, pour assurer leur fixation supplémentaire.

11. Armature de raccordement selon la revendication 10, caractérisée en ce que le boîtier de protection contient partiellement ou totalement les éléments de maintien (7).

12. Armature de raccordement selon l'une des revendications 1 à 11, caractérisée en ce que le manchon de raccordement (5) est pourvu d'un manchon rétractable sous forme d'un flexible rétractable placé d'un côté sur le câble de liaison (6).

13. Armature de raccordement selon l'une des revendications 1 à 12, caractérisée en ce qu'une douille d'embrochage est pré-montée dans le manchon de raccordement (5) pour l'insertion d'une extrémité du câble coaxial à large bande (4) libre débarrassé de son isolation extérieure.

14. Armature de raccordement selon l'une des revendications 1 à 13, caractérisée en ce qu' un dispositif de reprise des contraintes de traction est prévu pour au moins un câble coaxial à large bande (4).

15. Armature de raccordement selon l'une des revendications 1 à 14, caractérisée en ce que le dispositif de reprise des contraintes de traction est ancré mécaniquement d'une part à la gaine et/ou au conducteur extérieur dans une zone écartée du câble coaxial à large bande (4) et/ou au manchon de raccordement (5) et/ou au câble de liaison flexible (6) et, à l'autre extrémité, à un élément d'ancrage, de préférence au boîtier d'armature ou à un boîtier de protection séparé de celle-ci.

16. Armature de raccordement selon la revendication 14 ou 15, caractérisée en ce que le dispositif de reprise des contraintes de traction est constitué d'un élément de traction ne pouvant pas être allongé au-delà d'une longueur maximale non élastique mais flexible, de préférence sous forme d'un câble de fil, d'une chaîne, d'un élément flexible, etc.

17. Armature de raccordement selon la revendication 14 ou 15, caractérisée en ce que le dispositif de reprise des contraintes de traction est constitué d'un étrier de maintien (17) au moins rigide dans une large mesure qui est maintenu, avec possibilité de pivotement, de déplacement ou de flexion sur un point d'ancrage, de préférence sur le boîtier d'armature ou le boîtier de protection entourant le boîtier d'armature.

18. Armature de raccordement selon la revendication 14 ou 15, caractérisée en ce que le dispositif de reprise des contraintes de traction est constitué d'un dispositif de maintien ou de serrage (7) monté sur le boîtier d'armature (2) ou sur le boîtier de protection entourant celui-ci.

19. Armature de raccordement selon la revendication 17 ou 18, caractérisée en ce que l'étrier de maintien (17) rigide et pivotant ou déplaçable peut être arrêté de manière fixe dans une position prédéterminable par le dispositif de reprise des contraintes de traction.

20. Armature de raccordement selon l'une des revendications 1 à 15 ou 17 à 19, caractérisée en ce qu'il est prévu en outre un dispositif de reprise des contraintes de traction ou de cisaillement du conducteur intérieur qui comprend un élément d'arrêt fixé et monté sur la zone sans isolement d'un conducteur intérieur en saillie qui prend appui, au moins indirectement, vis-à-vis du diélectrique entre le conducteur intérieur et le conducteur extérieur et/ou le conducteur extérieur du câble coaxial à large bande (4) ou d'un élément de raccordement de l'étrier de maintien (17).

**21.** Armature de raccordement selon l'une des revendications 1 à 20, caractérisée en ce que le manchon de raccordement (5) convient pour l'insertion d'un câble coaxial à large bande (4) pourvu d'une fiche d'extrémité de câble, de préférence grâce à une douille d'embrochage pré-montée.

**22.** Armature de raccordement selon l'une des revendications 1 à 21, caractérisée en ce que le câble de liaison flexible (6) permet un rayon de flexion de moins de 50 mm, 40 mm, 30 mm, et de préférence même de moins de 20 mm.

**23.** Armature de raccordement selon la revendication 22, caractérisée en ce que le câble de liaison flexible (6) permet un rayon des flexions multiples avec des rayons de flexion inférieurs à 50 mm, 40 mm, 30 mm, et de préférence 20 mm.

FIG. 1

FIG. 2

FIG. 3

Fig.4

Fig.5